# EUROPÄISCHE PATENTANMELDUNG

(11) **EP 0 538 669 A1**
(43) Veröffentlichungstag der Anmeldung: **28.04.1993**
(21) Anmeldenummer: 92117064.3
(22) Anmeldetag: 06.10.1992
(51) Int. Cl.: B01D 53/04

(54) **Verfahren zur Reinigung eines mit Kohlenwasserstoffdämpfen beladenen Rohgas- oder Abgasstromes unter Rückgewinnung der Kohlenwasserstoffe**

(30) Priorität: 12.10.1991 DE 4133869
(71) Anmelder: Nitsche, Manfred Dr., D-21147 Hamburg (DE)
(72) Erfinder: Nitsche, Manfred Dr., D-21147 Hamburg (DE)
(74) Vertreter: Schulmeyer, Karl-Heinz, Dr.

(57) **Zusammenfassung**

Die Erfindung betrifft ein Verfahren zur Reinigung eines mit Kohlenwasserstoffdämpfen beladenen Rohgas- und/oder Abgasstromes unter Rückgewinnung der Kohlenwasserstoffe, bestehend aus einer Adsorption, einer Desorption und einer Kondensation und/oder Absorption, wobei die Adsorption in zwei parallel zueinander geschalteten zweistufigen Adsorberanlagen durchgeführt wird. Der beladene Gasstrom wird zunächst in der ersten Adsorberanlage zur Grobreinigung durch einen primären Adsorber (2) und anschließend zur Feinreinigung in einen dazu in Serie geschalteten sekundären Adsorber (4) geführt, wobei die im primären Adsorber (2) adsorbierten Kohlenwasserstoffe mit Hilfe einer Vakuumpumpe (26) desorbiert und die erhaltenen inertgasabgereicherten Kohlenwasserstoffdämpfe nach der Verdichtung in der Vakuumpumpe (26) in der Kondensations- und/oder Absorptionsanlage (24) zurückgewonnen und die nicht kondensierten bzw. absorbierten Kohlenwasserstoffanteile in den Rohgasstrom zurückgeführt werden. Die im sekundären Adsorber (4) adsorbierten Kohlenwasserstoffe werden desorbiert und nach Verdichtung in der Vakuumpumpe (27) in den Rohgasstrom zurückgeführt. Sobald die Sättigungswerte für die Adsorbentien in der ersten Adsorberanlage erreicht sind, wird auf die inzwischen regenerierte und desorbierte zweite Adsorberanlage umgeschaltet und die erste Adsorberanlage gleichzeitig einer Regeneration und Desorption unterworfen.

(Die Bezugszeichen beziehen sich auf die der Anmeldung beigefügte Figur.)

## Beschreibung

Die Erfindung betrifft ein Verfahren zur Reinigung eines mit Kohlenwasserstoffdämpfen, insbesondere Benzindämpfen, beladenen Rohgas- oder Abgasstromes unter Rückgewinnung der Kohlenwasserstoffe bzw. des Benzins.

Bei der Betankung von Tankwagen, Tankschiffen oder Lagertanks u.dgl. mit z.B. Ottokraftstoffen bildet sich über der betreffenden Flüssigkeit ein Kohlenwasserstoff-Luft-Gemisch, das während des Füllvorganges im Tank durch die Flüssigkeit verdrängt wird und, wenn keine besonderen Vorkehrungen getroffen werden, aus dem Tank in die Atmosphäre entweicht. Um die dadurch entstehenden, wirtschaftlich nicht unbeträchtlichen Verluste an Kohlenwasserstoffen zu vermindern und die Umwelt zu entlasten, sind bereits Verfahren zur Rückgewinnung von Kohlenwasserstoffen aus einem Kohlenwasserstoff-Luft-Gemisch vorgeschlagen worden.

So sind aus DE-PS 27 43 188 und DE-PS 27 60 187 Verfahren zur Rückgewinnung von leichten Kohlenwasserstoffen aus einem Luft-Kohlenwasserstoff-Gemisch bekannt, bei denen das Kohlenwasserstoff-Luft-Gemisch durch eine einstufige Adsorberanlage mit festem Adsorbens geschickt wird und dabei die Kohlenwasserstoffkomponenten aus dem Kohlenwasserstoff-Luft-Gemisch zu einem großen Teil adsorbiert werden. Zwei einstufige Adsorberanlagen sind parallel geschaltet, so daß in der Zeit, in der das Kohlenwasserstoff-Luft-Gemisch unter leichtem Überdruck durch den einen Adsorber geführt wird, der zweite Adsorber, der bereits Kohlenwasserstoffe adsorbiert enthält, unter Vakuum regeneriert wird. Dabei werden die adsorbierten Kohlenwasserstoffe als Kohlenwasserstoff-Luft-Gemisch mit Hilfe einer Vakuumpumpe desorbiert und abgesaugt, das Gemisch anschließend in einer Separatorstufe in eine flüssige und eine Dampfphase getrennt und die Dampfphase durch einen Absorber geleitet, in dem flüssige Kohlenwasserstoffe als Absorbens der kohlenwasserstoffhaltigen Dampfphase entgegengeführt werden, wobei die gasförmigen Kohlenwasserstoffe größtenteils absorbiert bzw. verflüssigt werden. Die nicht kondensierbaren Inertgase (Luft) verlassen mit einer Kohlenwasserstoffbeladung von ca. 2 kg/kg Luft den Absorber am Kopf und werden in den Rohgasstrom zurückgeführt, wo sie zusammen mit dem Rohgas einer erneuten Behandlung in einem einstufigen Adsorber unterworfen werden.

Bei diesen bekannten Verfahren muß eine erhebliche zusätzliche Adsorberkapazität zur Rückgewinnung der aus dem Absorberkopf zurückgeführten Kohlenwasserstoffmengen bereitgehalten werden. Ein weiterer Nachteil dieser bekannten Verfahren besteht darin, daß die Desorption jeweils sehr sorgfältig durchgeführt werden muß, damit der einstufige Adsorber danach möglichst vollständig regeneriert ist, so daß er in der Lage ist, während der nächsten Adsorptionsphase auch die schlecht adsorbierbaren Komponenten, z.B. Propan, in ausreichendem Maße zu adsorbieren. Nur so ist die erforderliche Absenkung der Austrittskonzentration des Kohlenwasserstoff-Luft-Gemisches am Kopf des Adsorbers zu erreichen. Dies gelingt allerdings nur bei sorgfältiger Einhaltung der geeigneten Arbeitsbedingungen; vor allem muß ein sehr gutes Vakuum beim Desorbieren angelegt werden, was eine große Vakuumpumpenleistung erfordert, und zusätzlich Strippgas eingeleitet werden, was eine höhere Kohlenwasserstoffrückführung in den Rohgasstrom zur Folge hat.

Aus US-PS 4 261 716 ist ein ähnliches Verfahren bekannt, bei dem ebenfalls zwei einstufige Adsorber parallel geschaltet sind, so daß das Luft-Kohlenwasserstoff-Gemisch durch den einen Adsorber geführt werden kann, während der andere regeneriert wird. Da die Bedingungen, unter denen das Verfahren durchgeführt wird, sehr ähnlich denen der vorbezeichneten Verfahren sind, ergeben sich auch die gleichen, vorstehend dargelegten Nachteile.

Ferner ist aus DE-PS 32 10 236 ein Verfahren zur Reinigung eines mit Dampf und/oder gasförmigen Schadstoffen beladenen Abgasstromes bekannt, bei dem die Kohlenwasserstoffeintrittsbeladung des zu behandelnden Abgasstromes zunächst durch eine vorgeschaltete Wäsche abgesenkt wird, wodurch hochsiedende bzw. schwer desorbierbare Komponenten vor Eintritt in die Adsorber abgeschieden werden. Man vermeidet dadurch, daß die Adsorber durch die hochsiedenden Komponenten blockiert werden, so daß die Arbeitskapazität der Adsorber voll für die Adsorption der verbleibenden Schadstoffe zur Verfügung steht. Nachteilig bei diesem Verfahren ist, daß man eine Kälteanlage benötigt, die energie- und kostenaufwendig ist und unter ungünstigen Bedingungen Vereisungsprobleme verursachen kann.

Der Erfindung liegt die Aufgabe zugrunde, ein Verfahren zu schaffen, mit dem die Reinigung eines mit Kohlenwasserstoffdämpfen beladenen Rohgas- oder Abgasstromes, insbesondere eines mit Benzindämpfen beladenen Luftstroms, und die Rückgewinnung der Kohlenwasserstoffe mit einem möglichst geringen Energieaufwand in besonders wirtschaftlicher Weise ermöglicht wird, wobei das Verfahren sich insbesondere durch eine große Flexibilität auszeichnen soll, mit der es sich leicht an die wechselnden Bedingungen, insbesondere hinsichtlich der schwankenden Konzentration und Zusammensetzung der Kohlenwasserstoffe in dem Gasstrom und der anfallenden Rohgas- bzw. Abgasmengen, anpassen kann.

Erfindungsgemäß wird diese Aufgabe durch ein Verfahren zur Reinigung eines mit Kohlenwasserstoffdämpfen beladenen Rohgas- oder Abgasstromes der im Oberbegriff des Hauptpatentanspruchs bezeichneten Art mit den im kennzeichnenden Teil des Hauptpatentanspruchs angegebenen Merkmalen gelöst. Bevorzugte Ausgestaltungen des erfindungsgemäßen Verfahrens sind in den Unteransprüchen charakterisiert.

Durch die erfindungsgemäße Ausgestaltung der beiden parallel geschalteten Adsorberanlagen in zweistufiger Form, so daß jede der beiden Adsorberanlagen aus einem Primäradsorber, der den Hauptteil der Kohlenwasserstoffdämpfe aus dem beladenen Gasstrom adsorbiert, und einem in Serie dazu angeordneten Sekundäradsorber besteht, der den größten Teil der nach Durchlaufen des Primäradsorbers noch in dem Gasstrom enthaltenen Kohlenwasserstoffdämpfe adsorbiert, gelingt es in zuverlässigerer Weise als bisher, aus dem beladenen Gasstrom ein Reingas mit einem nur noch sehr geringfügigen Anteil an Kohlenwasserstoffdämpfen zu erhalten, so daß das resultierende Reingas unbedenklich an die Umwelt abgegeben werden kann. Der Primäradsorber übernimmt die Hauptreinigung des in der Regel mit Kohlenwasserstoffdämpfen hochbeladenen Gasstromes und ist so ausgestaltet, daß er die Kohlenwasserstoffkomponenten aus dem zugeführten beladenen Gasstrom mit hohem Adsorptionspotential und Partialdruck adsorbieren kann. Im Sekundäradsorber, der in Serie zu dem Primäradsorber geschaltet ist, so daß der gesamte vorgereinigte Gasstrom durch den Sekundäradsorber strömen muß, erfolgt die Feinreinigung des Gasstromes, der anschließend als Reingas in die Atmosphäre austritt.

Da bei der großen Menge an Kohlenwasserstoffen, die bei der Hauptreinigung im Primäradsorber adsorbiert wird, eine nicht unerhebliche Wärmemenge frei wird, ist in einer bevorzugten Ausführungsform des erfindungsgemäßen Verfahrens vorgesehen, daß die erste Stufe der Adsorptionsphase in einem Primäradsorber durchgeführt wird, der zusätzlich zum Adsorbens noch mit einem Wärmespeichermaterial ausgerüstet ist, durch das die bei der Adsorption auftretende Wärmetönung merklich reduziert werden kann.

Ein weiterer Vorteil des erfindungsgemäßen Verfahrens besteht darin, daß die Aufteilung in eine Haupt- oder Grobreinigung im Primäradsorber und eine Feinreinigung im Sekundäradsorber die Anwendung unterschiedlicher Verfahrensbedingungen in beiden Stufen erlaubt, so daß jede Stufe unter für sie spezifischen, wirtschaftlich besonders vorteilhaften Bedingungen durchgeführt werden kann. Dies gilt sowohl für die Adsorptionsphase als auch insbesondere für die Desorptionsphase. Damit der Primäradsorber auch hohe Eintrittsbeladungen des zu reinigenden Gasstroms bewältigen kann, wird er zweckmäßigerweise mit einer möglichst hohen Aufnahmekapazität ausgestattet. Da die Ansprüche in dieser Hinsicht an den Sekundäradsorber in der Regel geringer sind, kann für den Sekundäradsorber eine deutlich geringere Aufnahmekapazität vorgesehen werden. In einer bevorzugten Ausführungsform des erfindungsgemäßen Verfahrens wird daher die zweistufige Adsorption nacheinander in einem größer dimensionierten Primäradsorber und in einem deutlich kleiner dimensionierten Sekundäradsorber durchgeführt, wobei die Regenerierung und Desorption in beiden Stufen bei unterschiedlichen Drücken in der Weise erfolgt, daß während der Regenerierungsphase im Sekundäradsorber ein deutlich besseres Vakuum herrscht als im Primäradsorber. Beispielsweise liegt der Enddruck nach Einstellung des Vakuums im Primäradsorber bei ca. 50 mbar und im Sekundäradsorber bei ca. 10 mbar; das Größenverhältnis zwischen Primär- und Sekundäradsorber kann in einem ziemlich großen Bereich schwanken, wobei die Adsorptionskapazität des Sekundäradsorbers z.B. bei 10 bis 25% der Kapazität des Primäradsorbers liegt.

Auf diese Weise können die Verhältnisse in den zwei Adsorptionsstufen wirtschaftlich und technisch optimal ausgestaltet werden. Beispielsweise kann die Regeneration bzw. Desorption im Primäradsorber bei einem geringeren Vakuum und mit weniger Strippgas als bei den bisher bekannten Verfahren durchgeführt werden, wodurch der Regenerationsaufwand deutlich verringert werden kann, da das abzusaugende Gasvolumen und der Energiebedarf für den Betrieb der Vakuumpumpen verringert werden. Durch eine Verminderung der Strippgas- bzw. Inertgasmengen wird außerdem die Kondensations- bzw. Absorptionsanlage entlastet und die mit dem nicht kondensierbaren Inertgas in die Adsorber geführte Menge an Kohlenwasserstoffdämpfen vermindert.

Wie bereits erwähnt, dient der Sekundäradsorber zur Feinreinigung des bereits durch den Primäradsorber geführten Gasstromes. Entsprechend dieser Aufgabe braucht der Sekundäradsorber daher nur mit einer im Vergleich zum Primäradsorber deutlich geringeren Adsorptionskapazität ausgestattet zu sein. Daher wird das Verfahren auch vorzugsweise mit einem Sekundäradsorber durchgeführt, der erheblich kleiner dimensioniert ist als der Primäradsorber. Damit der Sekundäradsorber seine Aufgaben voll erfüllen kann, muß seine Regenerierung sehr sorgfältig und gründlich erfolgen, so daß er danach nur noch eine geringe Adsorbensendbeladung aufweist. Dies ist eine Voraussetzung dafür, daß der Sekundäradsorber nach der Regenerierung in der nächsten Verfahrensstufe wieder die gewünschte und erforderliche adsorptive Feinreinigung erreichen kann. Deshalb wird die Regenerierung bzw. Desorption des Sekundäradsorbers bei einem besseren Vakuum als im Primäradsorber und gegebenenfalls unter Zugabe von geringen Mengen an Strippgas durchgeführt.

Die mit Hilfe der Vakuumpumpen während der Desorption aus dem Sekundäradsorber abgesaugten Kohlenwasserstoffdämpfe, z.B. Benzindämpfe, werden zusammen mit dem Strippgas bzw. Inertgas nach der Verdichtung in der Vakuumpumpe in den Rohgas- oder Abgaseintrittsstrom zurückgeführt. Die Kohlenwasserstoff- bzw. Benzinkonzentration in dem abgesaugten Desorptionsstrom ist wesentlich höher als im Eintrittsstrom, so daß die Adsorption im Primäradsorber erleichtert wird. Der Sekundäradsorber dient somit sowohl zur Feinreinigung als auch zur Aufkonzentrierung der Kohlenwasserstoffdämpfe vor der Rückführung in den Rohgas- oder Abgaseintrittsstrom.

Die in dem erfindungsgemäßen Verfahren eingesetzten Primär- und Sekundäradsorber enthalten in an sich bekannter Weise Aggregate mit Adsorberfüllung, vorzugsweise aus Aktivkohle oder Kohlenstoff-Molekularsieben oder hydrophoben Zeolithen.

Mit dem erfindungsgemäßen Verfahren sind demnach besondere technische und wirtschaftliche Vorteile verbunden, insbesondere erreicht man eine große Flexibilität hinsichtlich der Werte des in die Atmosphäre abgelassenen Reingases, dessen Qualität sich durch die Dimensionierung und Betriebsweise des Sekundäradsorbers auf Austrittskonzentrationen der Kohlenwasserstoffdämpfe im Reingas von 0,15 g/Nm³ Reingas bis 30 g/Nm³ Reingas (Nm³ = Normkubikmeter) variieren läßt.

Selbstverständlich lassen sich mit dem erfindungsgemäßen Verfahren auch mit organischen Lösungsmitteldämpfen beladene Abgasströme unter weitgehender Rückgewinnung der Lösungsmittel reinigen.

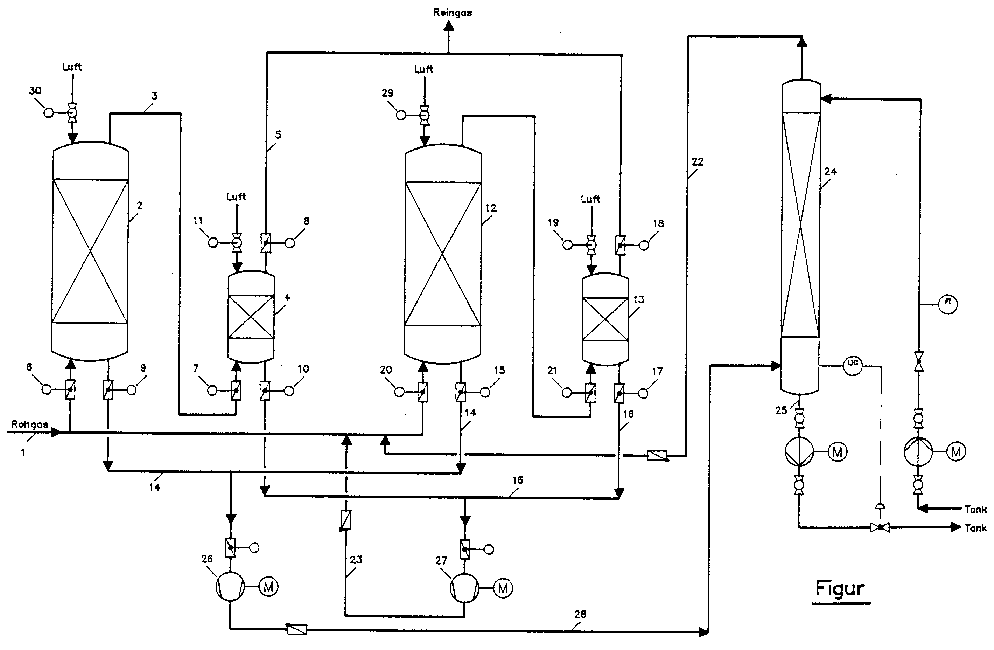

Die Erfindung wird anhand der Zeichnung, die schematisch eine Ausführungsform des erfindungsgemäßen Verfahrens darstellt, weiter erläutert.

Das mit Kohlenwasserstoffdämpfen, z.B. Benzindämpfen, beladene Rohgas strömt über die Rohgasleitung 1 und die geöffnete Armatur 6 in die erste Adsorberanlage, d.h. den Primäradsorber 2, wo die Hauptreinigung erfolgt, und danach über Leitung 3 und die geöffnete Armatur 7 zur Feinreinigung durch den Sekundäradsorber 4. Das gereinigte Abgas tritt über die geöffnete Armatur 8 und die Leitung 5 in die Atmosphäre aus. Während dieses Prozesses sind die Armaturen 9, 10, 11 und 30 sowie die Armatur 20 am Eingang zur zweiten Adsorberanlage (Primäradsorber 12 und Sekundäradsorber 13) geschlossen.

Während in der ersten Adsorberanlage mit dem Primäradsorber 2 und dem Sekundäradsorber 4 die Reinigung des mit Kohlenwasserstoffdämpfen beladenen Rohgases, gegebenenfalls zusammen mit ebenfalls beladenem Abgas, stattfindet, bis die Arbeitskapazität dieser Adsorptionsanlage, insbesondere des Primäradsorbers 2, nahezu erschöpft ist, werden in der zweiten Adsorberanlage der Primäradsorber 12 und der Sekundäradsorber 13 einer Regeneration und Desorption unterworfen. Über die Leitung 14 werden aus dem Primäradsorber 12 und über die Leitung 16 aus dem Sekundäradsorber 13 mit Hilfe der Vakuumpumpe 26 bzw. 27 die adsorbierten Kohlenwasserstoffdämpfe abgesaugt, wobei gegebenenfalls Strippgas als Hilfsmedium über die Armaturen 19 und 29 zugegeben wird. Die aus dem Primäradsorber 12 mit der Vakuumpumpe 26 desorbierten Kohlenwasserstoffdämpfe werden über Leitung 28 in die Kondensations- und/oder Absorptionsanlage 24 überführt und dort durch Kondensation und/oder Absorption in flüssiger Form zurückgewonnen. Die auf diese Weise zurückgewonnenen Kohlenwasserstoffe, z.B. Benzin, sammeln sich am Boden der Kondensations- und/oder Absorptionsanlage 24 und werden über die Leitung 25 abgezogen und z.B. einem geeigneten Tank zugeführt. Als geeignetes Waschmedium kann z.B. Benzin in der Kondensations- und/oder Absorptionsanlage 24 eingesetzt werden. Die Wirkungsweise einer Kondensations- und/oder Absorptionsanlage ist dem Fachmann bekannt und braucht daher nicht im einzelnen beschrieben zu werden.

Die nicht kondensierbaren Kohlenwasserstoffanteile werden am Kopf der Kondensations- und/oder Absorptionsanlage 24 über Leitung 22 abgeführt und in die Rohgasleitung 1 zurückgeleitet.

Die während der Regenerierung und Desorption aus dem Sekundäradsorber 13 mit der Vakuumpumpe 27 abgesaugten Kohlenwasserstoffdämpfe werden nach der Verdichtung mit Hilfe der Vakuumpumpe 27 über Leitung 23 in die Rohgasleitung 1 zurückgeführt. Während dieses Verfahrens sind die Armaturen 15, 17, 19 und 29 geöffnet und die Armaturen 18, 20 und 21 geschlossen.

Nach erfolgter Regenerierung und Desorption der zweiten Adsorberanlage mit dem Primäradsorber 12 und dem Sekundäradsorber 13 und vor Erreichen des Sättigungswertes des Adsorbens in der ersten Adsorberanlage mit dem Primäradsorber 2 und dem Sekundäradsorber 4 wird der mit Kohlenwasserstoffdämpfen beladene Gasstrom auf die zweite Adsorberanlage umgeschaltet und die erste Adsorberanlage in der gleichen Weise, wie für die zweite Adsorberanlage beschrieben, regeneriert und desorbiert. Dieses wechselseitige Umschalten kann, sobald die jeweiligen Bedingungen erfüllt sind, beliebig forgesetzt werden.

## Patentansprüche

1. Verfahren zur Reinigung eines mit Kohlenwasserstoffdämpfen beladenen Rohgas- und/oder Abgasstromes unter Rückgewinnung der Kohlenwasserstoffe, bestehend aus einer Adsorption, in der der beladene Gasstrom von den Kohlenwasserstoffdämpfen größtenteils befreit und danach als Reingas in die Atmosphäre entlassen wird, einer Desorption, in der die von einem geeigneten Adsorbens adsorbierten Kohlenwasserstoffe durch Absenken des Druckes mit einer Vakummpumpe vom Adsorbens desorbiert und abgesaugt werden, und einer Kondensation und/oder Absorption, in der die desorbierten Kohlenwasserstoffe kondensiert und/oder von im Gegenstrom geführten flüssigen Kohlenwasserstoffen absorbiert und aus dem Verfahren abgezogen werden, während die nicht kondensierten oder absorbierten Kohlenwasserstoffe in den Rohgasstrom zurückgeführt werden, wobei die Adsorption in der Weise durchgeführt wird, daß der mit Kohlenwasserstoffdämpfen beladene Gasstrom zunächst durch eine erste Adsorberanlage geleitet wird, bis der Sättigungswert des Adsorbens fast erreicht ist, und danach in eine zweite Adsorberanlage, die parallel zur ersten Adsorberanlage geschaltet ist, umgelenkt wird, in der die Adsorption fortgesetzt wird, während gleichzeitig die erste Adsorberanlage unter Vakuum regeneriert wird und die dabei desorbierten Kohlenwasserstoffe einer Kondensations- und/oder Absorptionsanlage zugeführt werden, worauf nach erfolgter Regenerierung und Desorption der ersten Adsorberanlage und vor Erreichen des Sättigungswertes des Adsorbens in der zweiten Adsorberanlage der mit Kohlenwasserstoffdämpfen beladene Gasstrom wieder auf die erste Adsorberanlage geleitet und die zweite Adsorberanlage regeneriert und desorbiert wird, **dadurch gekennzeichnet,** daß die Adsorption sowohl in der ersten als auch in der zweiten Adsorberanlage zweistufig mit jeweils einem primären Adsorber (2, 12) zur Grobreinigung des beladenen Gasstromes und einem dazu in Serie geschalteten sekundären Adsorber (4, 13) zur Feinreinigung durchgeführt wird, wobei die im primären Adsorber (2, 12) adsorbierten Kohlenwasserstoffe mit Hilfe einer Vakuumpumpe (26), gegebenenfalls unter Einsatz von Strippgas und/oder Wärme, desorbiert und die erhaltenen inertgasabgereicherten Kohlenwasserstoffdämpfe nach der Verdichtung in der Vakuumpumpe (26) in der Kondensations- und Absorptionsanlage (24) zurückgewonnen und die nicht kondensierten bzw. absorbierten Kohlenwasserstoffanteile in den Rohgasstrom zurückgeführt werden, während die im sekundären Adsorber (4, 13) adsorbierten Kohlenwasserstoffe, gegebenenfalls unter Einsatz von Strippgas und/oder Wärme, desorbiert und die erhaltenen inertgasabgereicherten Kohlenwasserstoffdämpfe nach der Verdichtung in der Vakuumpumpe (27) in den Rohgasstrom zurückgeführt werden.

2. Verfahren nach Anspruch 1, dadurch gekennzeichnet, daß die zweistufige Adsorption nacheinander in einem größer dimensionierten Primäradsorber (2, 12) und in einem deutlich kleiner dimensionierten Sekundäradsorber (4, 13) durchgeführt wird, wobei die Regenerierung und Desorption in beiden Stufen bei unterschiedlichen Drücken in der Weise erfolgt, daß während der Regenerierungs- und Desorptionsphase im Sekundäradsorber ein deutlich besseres Vakuum herrscht als im Primäradsorber.

3. Verfahren nach Anspruch 1 oder 2, dadurch gekennzeichnet, daß die erste Stufe der Adsorption in einem Primäradsorber (2, 12) durchgeführt wird, der zusätzlich zum Adsorbens noch mit einem Wärmespeichermaterial ausgerüstet ist.

4. Verfahren nach den Ansprüchen 1 bis 3, dadurch gekennzeichnet, daß für die Adsorption Primäradsorber (2, 12) und Sekundäradsorber (4, 13) mit unterschiedlichen Adsorbentien eingesetzt werden.
